# EUROPEAN PATENT APPLICATION

(11) **EP 3 882 578 A1**
(43) Date of publication of application: **22.09.2021**
(21) Application number: 19883754.4
(22) Date of filing: 16.10.2019
(51) Int. Cl.: G01D 21/00, G01D 5/353

(54) **CIVIL ENGINEERING STRUCTURE MONITORING SYSTEM, CIVIL ENGINEERING STRUCTURE MONITORING DEVICE, CIVIL ENGINEERING STRUCTURE MONITORING METHOD, AND NON-TRANSITORY COMPUTER-READABLE MEDIUM**

(30) Priority: 12.11.2018 JP 2018211915
(71) Applicant: NEC Corporation, 108-8001 Tokyo (JP)
(72) Inventor: YODA Yukihide, Tokyo 108-8001 (JP); AONO Yoshiaki, Tokyo 108-8001 (JP)
(74) Representative: Vossius & Partner Patentanwälte Rechtsanwälte mbB
(86) International application number: PCT/JP2019/040706
(87) International publication number: WO 2020/100509

(57) **Abstract**

A civil engineering structure monitoring system according to the present disclosure is provided with: a cable (20) including communication optical fibers and laid in a civil engineering structure (10); a reception unit (331) configured to receive, from at least one of the communication optical fibers included in the cable (20), an optical signal including a pattern corresponding to a deteriorated state of the civil engineering structure (10); and a detection unit (332) configured to detect the deteriorated state of the civil engineering structure (10) based on the pattern.

## Description

### Technical Field

The present disclosure relates to a civil engineering structure monitoring system, a civil engineering structure monitoring apparatus, a civil engineering structure monitoring method, and a non-transitory computer-readable medium.

### Background Art

Conventionally, abnormality detection of civil engineering structures such as tunnels and bridges is often performed manually. For example, it was usually the case that a worker judges an abnormality only by visual inspection or using the sound when hitting a civil engineering structure. However, manually performing abnormality detection of a civil engineering structure takes much cost and time, causing delays in the detection and treatment of abnormalities.

Accordingly, in recent time, a system for monitoring abnormalities in civil engineering structures using an optical fiber has been proposed (for example, Patent Literatures 1 and 2).

In the technique described in Patent Literature 1, a defect of a composite structure is detected by transmitting light through an optical fiber built in the composite structure (polymer, glass, etc.) and detecting stress or strain of the optical fiber. At this time, quantum dots contained in the optical fiber are made to cause a non-linear effect to increase the detection sensitivity.

Moreover, in the technique described in Patent Literature 2, a rock bolt is driven into the ceiling, wall surface, and bedrock of the underground space, and a pair of two optical fiber sensors are fixed in a crossed fashion to the rock bolt to calculate displacement of the rock bolt from the strain of the optical fiber.

### Citation List

### Patent Literature

Patent Literature 1: Japanese Unexamined Patent Application Publication No. 2014-052368
Patent Literature 2: Japanese Unexamined Patent Application Publication No. 2009-294039

### Summary of Invention

### Technical Problem

However, in the techniques described in Patent Literatures 1 and 2 a problem exists in that although it is possible to detect a state of a civil engineering structure in which a strong stress is applied to the optical fiber, it is difficult to detect a state which hardly affects the stress to the optical fiber, such as deterioration of a civil engineering structure.

Accordingly, it is an object of the present disclosure is provide a civil engineering structure monitoring system, a civil engineering structure monitoring apparatus, a civil engineering structure monitoring method, and a non-transitory computer-readable medium, which can solve the above described problem and can accurately detect a deteriorated state of a civil engineering structure.

### Solution to Problem

A civil engineering structure monitoring system according to an example embodiment includes:
a cable including communication optical fibers and laid in a civil engineering structure;
a reception unit configured to receive, from at least one of the communication optical fibers included in the cable laid in a civil engineering structure, an optical signal including a pattern corresponding to a deteriorated state of the civil engineering structure; and
a detection unit configured to detect the deteriorated state of the civil engineering structure based on the pattern.

A civil engineering structure monitoring apparatus according to an example embodiment includes:
a reception unit configured to receive, from at least one of communication optical fibers included in the cable laid in a civil engineering structure, an optical signal including a pattern corresponding to a deteriorated state of the civil engineering structure; and
a detection unit configured to detect the deteriorated state of the civil engineering structure based on the pattern.

A civil engineering structure monitoring method according to an example embodiment is a civil engineering structure monitoring method by a civil engineering structure monitoring apparatus, the method including:
receiving, from at least one of communication optical fibers included in a cable laid in a civil engineering structure, an optical signal including a pattern corresponding to a deteriorated state of the civil engineering structure; and
detecting the deteriorated state of the civil engineering structure based on the pattern.

A non-transitory computer-readable medium according to an example embodiment is a non-transitory computer-readable medium storing a program for making a computer execute procedures of:
receiving, from at least one of communication optical fibers included in the cable laid in a civil engineering structure, an optical signal including a pattern corresponding to a deteriorated state of the civil engineering structure; and
detecting the deteriorated state of the civil engineering structure based on the pattern.

### Advantageous Effects of Invention

According to the above-described aspects, it is possible to achieve an effect that a deteriorated state of a civil engineering structure can be detected with high accuracy.

### Brief Description of the Drawings

[Fig. 1] Fig. 1 shows an example of a configuration of a civil engineering structure monitoring system according to an example embodiment.
[Fig. 2] Fig. 2 shows an example of civil engineering information according to an example embodiment.
[Fig. 3] Fig. 3 shows an example of frequency characteristics of vibration data of a civil engineering structure, which is used in Method A in a civil engineering structure monitoring system according to an example embodiment.
[Fig. 4] Fig. 4 shows another example of frequency characteristics of vibration data of a civil engineering structure, which is used in Method A in a civil engineering structure monitoring system according to an example embodiment.
[Fig. 5] Fig. 5 shows an example of vibration data of a civil engineering structure, which is used in Method B in a civil engineering structure monitoring system according to an example embodiment.
[Fig. 6] Fig. 6 shows another example of vibration data of a civil engineering structure, which is used in Method B in a civil engineering structure monitoring system according to an example embodiment.
[Fig. 7] Fig. 7 shows an example of a monitoring point of a civil engineering structure, which is used in Method C in a civil engineering structure monitoring system according to an example embodiment.
[Fig. 8] Fig. 8 shows an example of vibration data of a civil engineering structure, which is used in Method C in a civil engineering structure monitoring system according to an example embodiment.
[Fig. 9] Fig. 9 shows an example of the method for laying an optical fiber cable in a civil engineering structure in Method C in a civil engineering structure monitoring system according to an example embodiment.
[Fig. 10] Fig. 10 shows another example of the method for laying an optical fiber cable in a civil engineering structure in Method C in a civil engineering structure monitoring system according to an example embodiment.
[Fig. 11] Fig. 11 shows a further example of the method for laying an optical fiber cable in a civil engineering structure in Method C in a civil engineering structure monitoring system according to an example embodiment.
[Fig. 12] Fig. 12 shows a still further example of the method for laying an optical fiber cable in a civil engineering structure in Method C in a civil engineering structure monitoring system according to an example embodiment.
[Fig. 13] Fig. 13 shows an example of machine learning by Method E in a civil engineering structure monitoring system according to an example embodiment.
[Fig. 14] Fig. 14 shows an example of deterioration level information according to an example embodiment.
[Fig. 15] Fig. 15 is a block diagram to show an example of a hardware configuration of a computer for implementing a civil engineering structure monitoring apparatus according to an example embodiment.
[Fig. 16] Fig. 16 is a flow diagram to show an example of an operation flow of a civil engineering structure monitoring system according to an example embodiment.
[Fig. 17] Fig. 17 is a diagram to show an example of a method for detecting a sign of deterioration or breakage of a civil engineering structure in a civil engineering structure monitoring system according to another example embodiment.
[Fig. 18] Fig. 18 is a diagram to show an example of civil engineering structure information according to another example embodiment.
[Fig. 19] Fig. 19 is a diagram to show an example of a civil engineering structure monitoring system according to another example embodiment.
[Fig. 20] Fig. 20 is a diagram to show another example of a civil engineering structure monitoring system according to another example embodiment.
[Fig. 21] Fig. 21 is a diagram to show an example of arrangement of a fiber sensing unit in a civil engineering structure monitoring system according to another example embodiment.
[Fig. 22] Fig. 22 is a diagram to show another example of arrangement of a fiber sensing unit in a civil engineering structure monitoring system according to another example embodiment.
[Fig. 23] Fig. 23 is a diagram to show a further example of arrangement of a fiber sensing unit in a civil engineering structure monitoring system according to another example embodiment.
[Fig. 24] Fig. 24 is a diagram to show a still further example of arrangement of a fiber sensing unit in a civil engineering structure monitoring system according to another example embodiment.
[Fig. 25] Fig. 25 is a diagram to show an example of operation of the fiber sensing unit at the time of disconnection of the optical fiber in the civil engineering structure monitoring system of Fig. 21.
[Fig. 26] Fig. 26 is a diagram to show an example of operation of the fiber sensing unit at the time of disconnection of the optical fiber in the civil engineering structure monitoring system of Fig. 22.
[Fig. 27] Fig. 27 is a diagram to show an example of operation of the fiber sensing unit at the time of disconnection of the optical fiber in the civil engineering structure monitoring system of Fig. 24.

### Description of Embodiments

Hereinafter, example embodiments of the present disclosure will be described with reference to the drawings.

### <Example embodiment>

### <Configuration of example embodiment

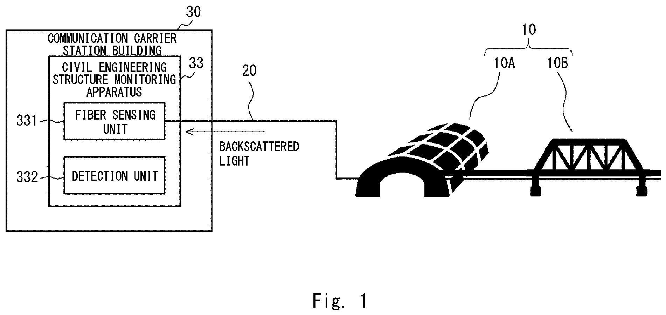

First, the configuration of the civil engineering structure monitoring system according to the present example embodiment will be described with reference to Fig. 1. Note that, in Fig. 1, for the simplification of explanation, as a civil engineering structure 10, only two examples: a civil engineering structure 10A which is a tunnel (a civil engineering structure number of A) and a civil engineering structure 10B which is a bridge (a civil engineering structure number of B) are shown. However, the civil engineering structure 10 is not limited to tunnels and bridges, and may include roads, railroad tracks, and the like.

As shown in Fig. 1, the civil engineering structure monitoring system according to the present example embodiment is configured to detect a deteriorated state of the civil engineering structure 10 (civil engineering structures 10A, 10B in Fig. 1) and include an optical fiber cable 20 and a civil engineering structure monitoring apparatus 33.

The optical fiber cable 20 is laid in the civil engineering structure 10. At this time, at the position where a deteriorated state of the civil engineering structure 10 is particularly desired to be detected, the optical fiber cable 20 may be densely installed, for example, by laying the optical fiber cable 20 while forming a loop. This makes it possible to improve a detection rate of deterioration of the civil engineering structure 10.

The optical fiber cable 20 is a cable constructed by covering one or more communication optical fibers, and one end thereof is routed inside a communication carrier station building 30.

The civil engineering structure monitoring system according to the present example embodiment detects a deteriorated state of the civil engineering structure 10 by using an optical fiber sensing technique which uses an optical fiber as a sensor.

Specifically, inside the communication carrier station building 30, pulsed light is injected into a communication optical fiber included in the optical fiber cable 20. Then, as the pulsed light is transmitted through the communication optical fiber in the direction to the civil engineering structure 10, backscattered light is generated for each transmission distance. This backscattered light returns to the inside of the communication carrier station building 30 via the same communication optical fiber.

Here, the civil engineering structure 10 is caused to vibrate by ambient disturbance (for example, travelling of a train or an automobile) or vibrates naturally, and the vibration of the civil engineering structure 10 is transmitted to the communication optical fiber. Moreover, the pattern in which the civil engineering structure 10 vibrates differs depending on the deteriorated state (deflection, corrosion, change in installation position, etc.) of the civil engineering structure 10.

Therefore, the backscattered light returning to the inside of the communication carrier station building 30 includes a pattern corresponding to a deteriorated state of the civil engineering structure 10. In the example of Fig. 1, since the civil engineering structures 10A and 10B are provided, the backscattered light returning to the inside of the communication carrier station building 30 will include a pattern corresponding to the deteriorated state of each of the civil engineering structures 10A and 10B.

The civil engineering structure monitoring system according to the present example embodiment detects a deteriorated state of the civil engineering structure 10 by utilizing the fact that the backscattered light returning to the inside of the communication carrier station building 30 includes a pattern corresponding to the deteriorated state of the civil engineering structure 10.

Here, the civil engineering structure monitoring apparatus 33 described above is provided inside the communication carrier station building 30. The civil engineering structure monitoring apparatus 33 is a newly installed facility for the implementation of the present example embodiment.

The civil engineering structure monitoring apparatus 33 is an apparatus having a function as an optical fiber sensing instrument and also having a function of detecting a deteriorated state of the civil engineering structure 10. Specifically, the civil engineering structure monitoring apparatus 33 includes a fiber sensing unit 331 and a detection unit 332. The fiber sensing unit 331 is an example of a reception unit.

The fiber sensing unit 331 injects pulsed light into at least one communication optical fiber included in the optical fiber cable 20. This pulsed light is transmitted in the direction to the civil engineering structure 10.
Further, the fiber sensing unit 331 receives backscattered light for the pulsed light from the same communication optical fiber as the communication optical fiber into which the pulsed light is injected. This backscattered light is received from the direction of the civil engineering structure 10.

At this time, as described above, the backscattered light received by the fiber sensing unit 331 includes a pattern corresponding to a deteriorated state of the civil engineering structure 10. Further, in the example of Fig. 1, since the civil engineering structures 10A and 10B are provided, the fiber sensing unit 331 receives backscattered lights including a pattern corresponding to the deteriorated state of each of the civil engineering structures 10A and 10B in chronological order.

Therefore, upon receiving the backscattered light including a pattern corresponding to a deteriorated state of the civil engineering structure 10, the fiber sensing unit 331 first determines the civil engineering structure 10 in which the backscattered light is generated.

Then, the detection unit 332 detects the deteriorated state of the determined civil engineering structure 10 based on the pattern corresponding to the deteriorated state of the determined civil engineering structure 10.

Accordingly, hereinafter, first, description will be made on the method of determining the civil engineering structure 10 in which the backscattered light is generated, when the backscattered light including the pattern corresponding to the deteriorated state of the civil engineering structure 10 is received in the fiber sensing unit 331.

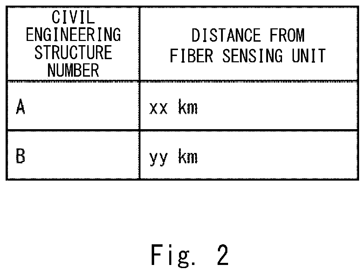

In the present example embodiment, the fiber sensing unit 331 holds in advance civil engineering structure information including the position information indicating the position of each civil engineering structure 10. Fig. 2 shows an example of the civil engineering structure information. Note that yy> xx in Fig. 2. The fiber sensing unit 331 calculates a generation position where the backscattered light is generated based on a time difference between the time when the pulsed light is injected into the communication optical fiber and the time when the backscattered light including the pattern corresponding to the deteriorated state of the civil engineering structure 10 is received from the same communication optical fiber. At this time, the fiber sensing unit 331 calculates the generation position such that the smaller the above-described time difference is, the closer it is from the fiber sensing unit 331. Then, the fiber sensing unit 331 determines the civil engineering structure 10 in which the backscattered light is generated by referring to the civil engineering structure information of Fig. 2.

In the example of Fig. 1, the fiber sensing unit 331 receives backscattered lights including a pattern corresponding to a deteriorated state of each of the civil engineering structures 10A and 10B in chronological order. Therefore, the fiber sensing unit 331 calculates the generation positions of these backscattered lights, respectively, and refers to the civil engineering structure information in Fig. 2. As a result, the fiber sensing unit 331 determines the backscattered light whose generation position coincides with the distance from the fiber sensing unit 331 to the civil engineering structure 10A, as the backscattered light generated in the civil engineering structure 10A. Further, the fiber sensing unit 331 determines the backscattered light whose generation position coincides with the distance from the fiber sensing unit 331 to the civil engineering structure 10B, as the backscattered light generated in the civil engineering structure 10B.

Subsequently, hereinafter, a method of detecting a deteriorated state of the determined civil engineering structure 10 in the detection unit 332 will be described.

### (A) Method A

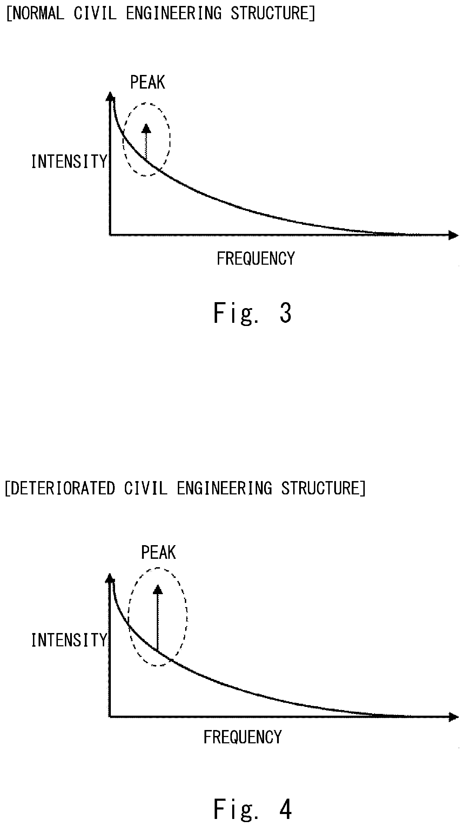

First, Method A for detecting a deteriorated state of the civil engineering structure 10 will be described with reference to Figs. 3 and 4. Figs. 3 and 4 show frequency characteristics (horizontal axis is frequency, and vertical axis is intensity (amplitude)) of the vibration data (horizontal axis is time, and vertical axis is intensity (amplitude)) of civil engineering structure 10 after being subjected to FFT (Fast Fourier Transform). Further, Fig. 3 shows the frequency characteristics of a normal civil engineering structure 10, and Fig. 4 shows the frequency characteristics of a deteriorated civil engineering structure 10.

The fiber sensing unit 331 performs processing to determine the civil engineering structure 10 in which the backscattered light received from the communication optical fiber is generated. Further, the fiber sensing unit 331 performs processing to detect the state of vibration, the state of temperature, the state of sound, and the like in the determined civil engineering structure 10 by detecting the backscattered light with a distributed acoustic sensor, a distributed vibration sensor, a distributed temperature sensor, or the like.

Therefore, the detection unit 332 detects a pattern corresponding to a deteriorated state of the determined civil engineering structure 10 based on the processing result of the backscattered light by the fiber sensing unit 331. At this time, it becomes possible for the detection unit 332 to detect a dynamic fluctuation pattern of the vibration by detecting, for example, the transition of such as the intensity fluctuation, vibration position, and vibration frequency of the vibration generated in the civil engineering structure 10. In addition, by detecting together the dynamic fluctuation pattern of the sound and the temperature generated in the civil engineering structure 10, the detection unit 332 becomes possible to detect a complex unique pattern of the civil engineering structure 10, and detect a deteriorated state with higher accuracy. Here, specifically, the frequency characteristics of the civil engineering structure 10 as shown in Figs. 3 and 4 are detected.

As shown in Figs. 3 and 4, an intensity peak occurs in the frequency characteristics of the civil engineering structure 10. The frequency at which the peak occurs becomes a dynamic fluctuation pattern which differs depending on the deteriorated state of the civil engineering structure 10. Specifically, in the frequency characteristics of a deteriorated civil engineering structure 10 (Fig. 4), the frequency at which the intensity peak occurs is shifted to the higher frequency side compared with the frequency characteristics of a normal civil engineering structure 10 (Fig. 3).

Therefore, when detecting the deteriorated state of the civil engineering structure 10, the detection unit 332 first detects the frequency characteristics (for example, Figs. 3 and 4) of the civil engineering structure 10. Subsequently, the detection unit 332 detects the deteriorated state of the civil engineering structure 10 based on the frequency at which a peak occurs in the frequency characteristics of the civil engineering structure 10. Further, the detection unit 332 may detect a deterioration level based on the magnitude of the shift amount shifted from the frequency at which the peak occurs in the frequency characteristics of the normal civil engineering structure 10.

Note that in Method A, when the civil engineering structure 10 deteriorates, the frequency at which a peak occurs is shifted to the higher frequency side, but the relationship between the deterioration and the shift direction of frequency is merely an example, and this is not limiting. Since the pattern of the civil engineering structure 10 is determined by the state and the material, etc. unique to the civil engineering structure 10, the frequency at which a peak occurs may be shifted to the lower frequency side upon deterioration depending on the civil engineering structure 10.

Moreover, the peak used in Method A not only appears, for example, in the vibration generated when a train or an automobile travels through the civil engineering structure 10, but also appears immediately before or immediately after a train or an automobile travels through the civil engineering structure 10.

### (B) Method B

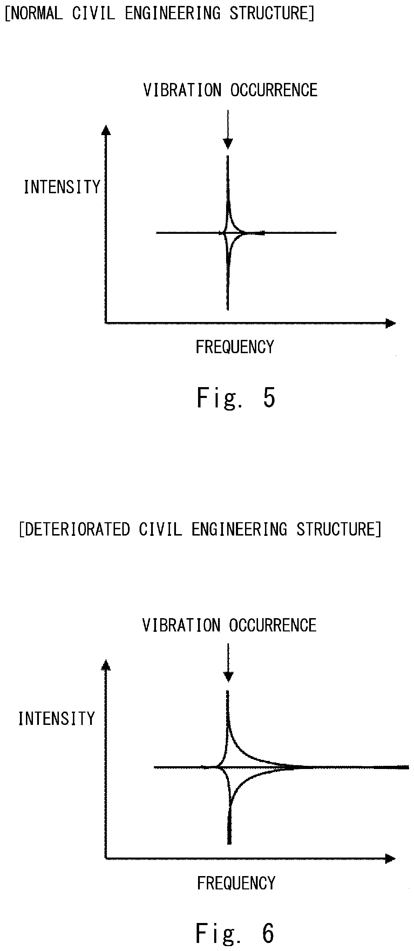

Subsequently, Method B for detecting a deteriorated state of the civil engineering structure 10 will be described with reference to Figs. 5 and 6. Figs. 5 and 6 show vibration data (the horizontal axis is time, and the vertical axis is intensity (amplitude)) of the civil engineering structure 10. Further, Fig. 5 shows vibration data of a normal civil engineering structure 10, and Fig. 6 shows vibration data of a deteriorated civil engineering structure 10.

In Method B, the worker generates vibration in the civil engineering structure 10 by means of such as hitting the civil engineering structure 10 with a hammer, and utilizes the vibration.

Similarly to Method A described above, the detection unit 332 detects a pattern corresponding to a deteriorated state of the civil engineering structure 10 based on the processing result by the fiber sensing unit 331. Specifically, in Method B, the frequency characteristics of the civil engineering structure 10 as shown in Figs. 5 and 6 are detected.

As shown in Figs. 5 and 6, the vibration generated in the civil engineering structure 10 is subsequently attenuated. This attenuation time becomes a dynamic fluctuation pattern that differs depending on the deteriorated state of the civil engineering structure 10. Specifically, as shown in Fig. 5, in the case of a normal civil engineering structure 10, the attenuation time of vibration is short. On the other hand, as shown in Fig. 6, in the case of a deteriorated civil engineering structure 10, the attenuation time of vibration has become long.

Therefore, when detecting a deteriorated state of the civil engineering structure 10, the detection unit 332 first detects the vibration data (for example,

Figs. 5 and 6) of the civil engineering structure 10. Subsequently, the detection unit 332 detects a deteriorated state of the civil engineering structure 10 based on the attenuation time of the vibration generated in the civil engineering structure 10 in the vibration data of the civil engineering structure 10. Further, the detection unit 332 may detect a deterioration level based on the magnitude of the attenuation time.

Note that in Method B, when the civil engineering structure 10 deteriorates, the attenuation time of vibration becomes long, but the relationship between the deterioration and the attenuation time of vibration is merely an example, and is not limited to this. Since the pattern of the civil engineering structure 10 is determined by the state and the material, etc. unique to the civil engineering structure 10, the attenuation time of vibration may be shortened upon deterioration, depending on the civil engineering structure 10.

Further, in Method B, the worker uses the vibration artificially generated in the civil engineering structure 10, but this is not limiting. For example, vibration is generated when a train or an automobile travels through the civil engineering structure 10, and that vibration may be used. Further, the vibration generated immediately before or immediately after the train or the automobile travels through the civil engineering structure 10 may be used.

### (C) Method C

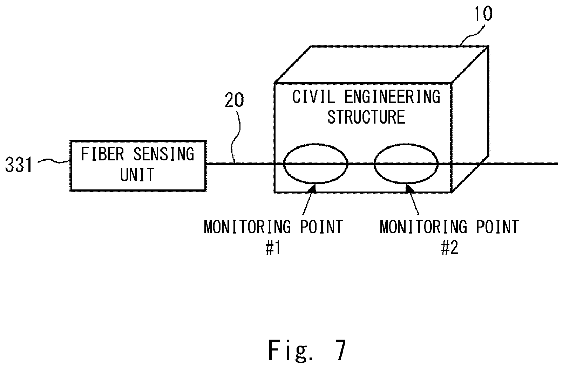

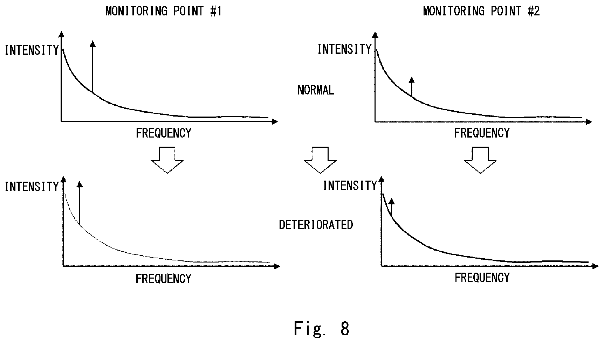

Subsequently, Method C for detecting a deteriorated state of the civil engineering structure 10 will be described with reference to Figs. 7 and 8. Fig. 7 shows monitoring points for the civil engineering structure 10, which are used in Method C. In Fig. 7, illustration of the detection unit 332 is omitted. Further, each figure included in Fig. 8 shows the frequency characteristics of the civil engineering structure 10, similar to those in Figs. 3 and 4.

In general, the civil engineering structure 10 does not vibrate uniformly at each position.

Therefore, the vibration that can be acquired differs depending on the monitoring point at which monitoring of the civil engineering structure 10 is performed, and the features of the vibration also differ.

For that reason, by devising the method of laying the optical fiber cable 20 in the civil engineering structure 10, it becomes possible to increase vibrations at various monitoring points of the civil engineering structure 10.

Accordingly, in Method C, vibrations are acquired at a plurality of monitoring points (two monitoring points #1 and #2 in Fig. 7) for one civil engineering structure 10, and features of the plurality of vibrations are combined, thereby improving the accuracy of deterioration detection of the civil engineering structure 10.

When detecting a deteriorated state of the civil engineering structure 10, the detection unit 332, as in Method A described above, detects a pattern corresponding to a deteriorated state at each of the two monitoring points #1 and #2 based on the processing result by the fiber sensing unit 331. Specifically, in Method C, frequency characteristics similar to those of Figs. 3 and 4 are detected. Moreover, the detection unit 332 periodically detects a pattern corresponding to a deteriorated state at each of the two monitoring points #1 and #2.

Then, the detection unit 332 detects a deteriorated state of the civil engineering structure 10 based on the frequency at which a peak occurs in the frequency characteristics in chronological order of each of the two monitoring points #1 and #2. Specifically, the detection unit 332 detects that the civil engineering structure 10 is deteriorated, when the frequency at which an intensity peak occurs is shifted to the lower frequency side in the both frequency characteristics of the two monitoring points #1 and #2. Further, the detection unit 332 may detect a deterioration level of the civil engineering structure 10 based on the magnitude of the shift amount.

Note that, in method C, the frequency at which a peak occurs is shifted to the lower frequency side when the civil engineering structure 10 deteriorates, but as explained in method A, the relationship between the deterioration and the shift direction of frequency is merely an example, and is not limited to this.

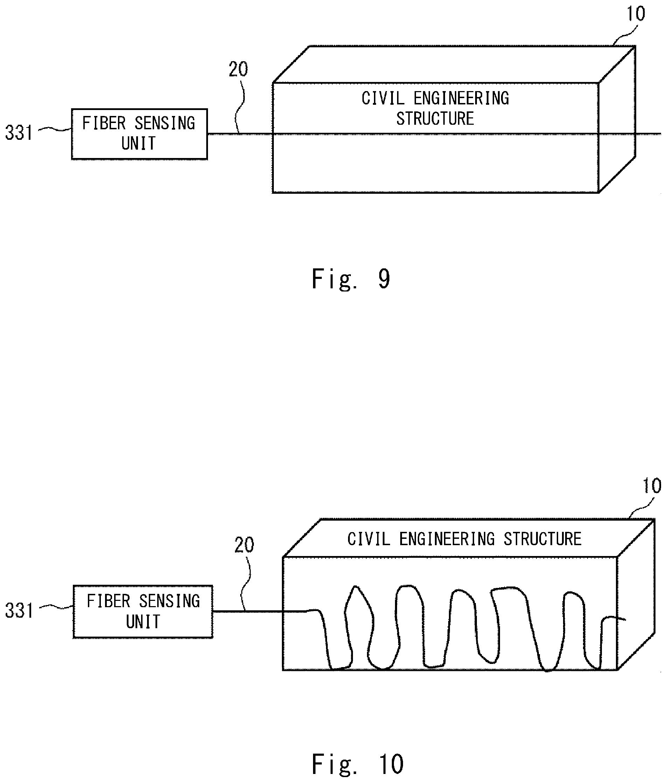

Subsequently, with reference to Figs. 9 to 11, the method of laying the optical fiber cable 20 in the civil engineering structure 10 in Method C will be described. Note that in Figs. 9 to 11, illustration of the detection unit 332 is omitted.

In the example of Fig. 9, the optical fiber cable 20 is laid linearly with respect to the civil engineering structure 10. In this case, the civil engineering structure 10 can be represented by a line to monitor vibration conditions.

In the example of Fig. 10, the optical fiber cable 20 is laid in a zigzag fashion on the specific surface so as to cover a specific surface parallel to the axial direction of the optical fiber cable 20 in the civil engineering structure 10. In this case, it is possible to monitor the vibration conditions of the entire specific surface of the civil engineering structure 10.

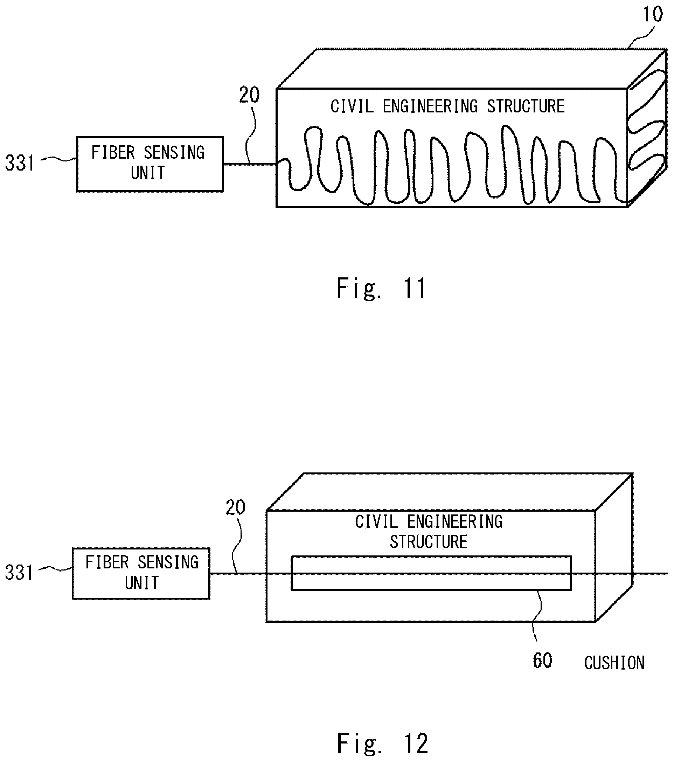

In the example of Fig. 11, the optical fiber cables 20 are laid in a zigzag fashion on the specific surface and a second specific surface such that in addition to the specific surface of the civil engineering structure 10 of Fig. 10, the second specific surface which is orthogonal to the axial direction of the optical fiber cable 20 of the civil engineering structure 10 is also covered. In this case, it is possible to monitor the vibration conditions of the entire civil engineering structure 10 (in three axial directions).

In this way, especially in the examples of Figs. 10 and 11, it is possible to increase the number of monitoring points that can acquire the vibration of the civil engineering structure 10.

Further, when the civil engineering structure 10 is in a condition of violently shaking, excessive vibration is monitored, and it becomes impossible to monitor the vibration condition at an appropriate intensity.

In that case, as shown in Fig. 12, a cushioning material or the like that lessens the impact, such as a cushion 60, may be installed between the optical fiber cable 20 and the civil engineering structure 10. As a result, the vibration transmitted from the civil engineering structure 10 is lessened, so that the vibration condition can be monitored at an appropriate intensity.

### (D) Method D

Next, Method D for detecting a deteriorated state of the civil engineering structure 10 will be described.

In Method D, the detection unit 332 detects a deteriorated state of the civil engineering structure 10 by using an association table.

The detection unit 332 holds an association table in which the pattern corresponding to the deteriorated state of the civil engineering structure 10 and the deteriorated state of the civil engineering structure 10 are associated with each other. The pattern corresponding to a deteriorated state is, for example, the frequency characteristics of vibration data as shown in Figs. 3 and 4 and described in Method A, and the vibration data as shown in Figs. 5 and 6 and described in Method B.

When detecting a deteriorated state of the civil engineering structure 10, the detection unit 332 first detects a pattern corresponding to a deteriorated state of the civil engineering structure 10. Subsequently, the detection unit 332 determines the deteriorated state of the civil engineering structure 10 in association with the pattern corresponding to the deteriorated state of the civil engineering structure 10 by using the above-described association table.

### (E) Method E

Next, Method E for detecting a deteriorated state of the civil engineering structure 10 will be described.

In Method E, the detection unit 332 performs machine learning (for example, deep learning) of patterns corresponding to deteriorated states of the civil engineering structure 10, and uses the training result (initial training model) of the machine learning to detect a deteriorated state of the civil engineering structure 10.

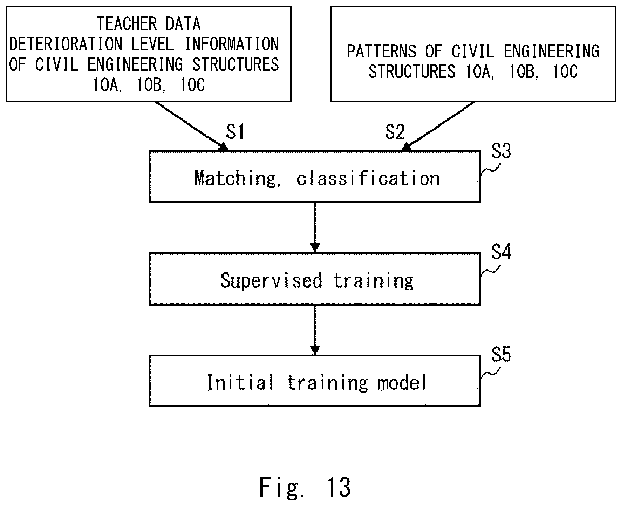

First, the method of machine learning in Method E will be described with reference to Fig. 13. Here, a method of performing training with patterns of three civil engineering structures 10 (referred to as civil engineering structures 10A, 10B, and 10C) as teacher data will be described.

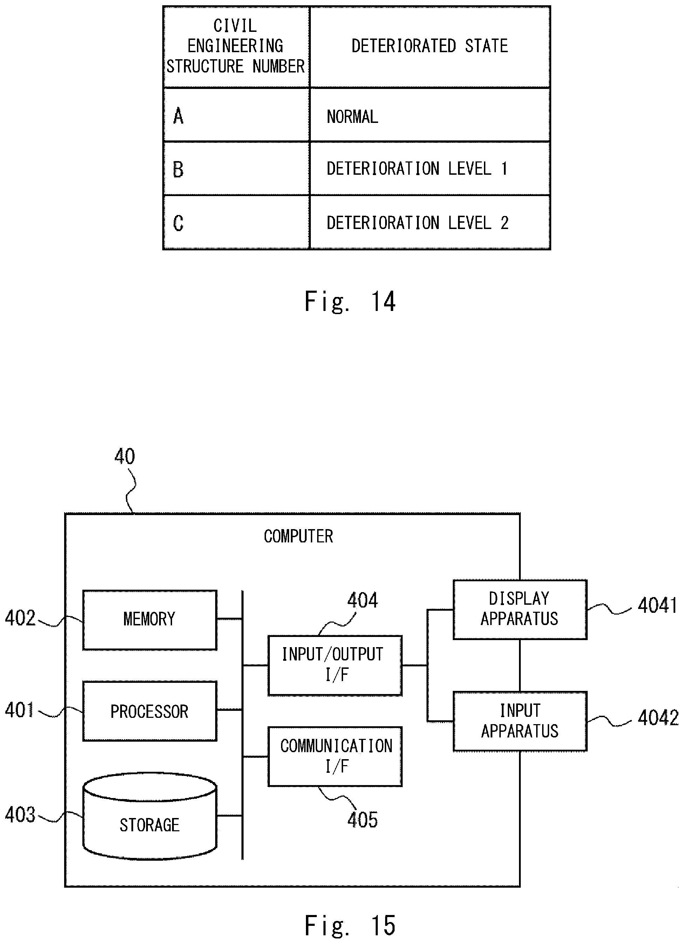

As shown in Fig. 13, the detection unit 332 inputs teacher data which is deterioration level information indicating the degree of deterioration of the civil engineering structures 10A, 10B, and 10C, and patterns corresponding to deteriorated states of the civil engineering structures 10A, 10B, and 10C (steps S1 and S2). Fig. 14 shows an example of deterioration level information that serves as the teacher data. Note that, in Fig. 14, a larger numerical value of the deterioration level indicates further progress of deterioration. Moreover, the deterioration level information is held by the detection unit 332. Further, patterns corresponding to deteriorated states include, for example, the frequency characteristics of the vibration data as shown in Figs. 3 and 4 and described in Method A, and the vibration data as shown in Figs. 5 and 6 and described in Method B.

Subsequently, the detection unit 332 performs matching and classification of the two (step S3) to perform supervised training (step S4). As a result, an initial training model is obtained (step S5). This initial training model will be a model which outputs a deteriorated state of the civil engineering structure 10 when a pattern generated in the civil engineering structure 10 is inputted.

Subsequently, a method for detecting a deteriorated state of the civil engineering structure 10 in Method E will be described.

When detecting a deteriorated state of the civil engineering structure 10, the detection unit 332 first detects a pattern corresponding to a deteriorated state of the civil engineering structure 10, and then inputs the detected pattern into the initial training model. As a result, the detection unit 332 obtains a deteriorated state of the civil engineering structure 10 as an output result of the initial training model.

As described above, in Method E, machine learning of a pattern corresponding to a deteriorated state of the civil engineering structure 10 is performed, and the training result of the machine learning is used to detect the deteriorated state of the civil engineering structure 10.

It may be difficult through analysis by a human to extract features for detecting a deteriorated state of the civil engineering structure 10 from the data. In Method E, by constructing a training model from a large number of patterns, it is possible to detect a deteriorated state of the civil engineering structure 10 with high accuracy even when it is difficult through analysis by a human.

In the machine learning in Method E, in the initial state, a training model may be created based on two or more teacher data. Further, the training model may be newly trained with a newly detected pattern. At that time, the detailed conditions for detecting the deteriorated state of the civil engineering structure 10 may be adjusted from the new training model.

Subsequently, referring to Fig. 15, the hardware configuration of the computer 40 for implementing the civil engineering structure monitoring apparatus 33 will be described below.

As shown in Fig. 15, a computer 40 includes a processor 401, a memory 402, a storage 403, an input/output interface (input/output I/F) 404, a communication interface (communication I/F) 405, and the like. The processor 401, the memory 402, the storage 403, the input/output interface 404, and the communication interface 405 are interconnected by a data transmission line for transmitting and receiving data to and from each other.

The processor 401 is, for example, an arithmetic processing unit such as a CPU (Central Processing Unit) or a GPU (Graphics Processing Unit). The memory 402 is, for example, a memory such as a RAM (Random Access Memory) or a ROM (Read Only Memory). The storage 403 is a storage device such as an HDD (Hard Disk Drive), an SSD (Solid State Drive), or a memory card. Further, the storage 403 may be a memory such as a RAM or a ROM.

The storage 403 stores programs that implement the functions of the fiber sensing unit 331 and the detection unit 332 included in the civil engineering structure monitoring apparatus 33. The processor 401 implements the functions of the fiber sensing unit 331 and the detection unit 332 by executing each of these programs. Here, when executing each of the above-described programs, the processor 401 may read out these programs onto the memory 402 and then execute the programs, or may execute the programs without reading out them onto the memory 402. The memory 402 and the storage 403 also play a role of storing information and data held by the fiber sensing unit 331 and the detection unit 332.

Further, the above-described programs may be stored using various types of non-transitory computer-readable media and supplied to computers (including the computer 40). The non-transitory computer-readable media include various types of tangible storage media. Examples of the non-temporary computer-readable medium include magnetic recording media (for example, flexible disks, magnetic tapes, hard disk drives), magneto-optical recording media (for example, magneto-optical disks), CD-ROMs (Compact Disc-Read Only Memory), CD-R (CD-Recordable), CD-R/W (CD-ReWritable), semiconductor memory (for example, mask ROM, PROM (Programmable ROM), EPROM (Erasable PROM), flash ROM, RAM (Random Access Memory)). The programs may also be supplied to the computers through various types of transitory computer-readable media. Examples of the transitory computer-readable media include electrical signals, optical signals, and electromagnetic waves. The transitory computer-readable medium can supply programs to the computers through a wired communication path such as an electric wire and an optical fiber, or a wireless communication path.

The input/output interface 404 is connected with a display apparatus 4041, an input apparatus 4042, and the like. The display apparatus 4041 is an apparatus that displays a screen corresponding to rendering data processed by the processor 401, such as an LCD (Liquid Crystal Display) or a CRT (Cathode Ray Tube) display. The input apparatus 4042 is an apparatus that receives an operation input of an operator, and is, for example, a keyboard, a mouse, a touch sensor, and the like. The display apparatus 4041 and the input apparatus 4042 may be integrated and implemented as a touch panel. The computer 40 may also include a sensor (not shown), including a distributed acoustic sensor, a distributed vibration sensor, a distributed temperature sensor, and the like, and this sensor may be connected to the input/output interface 404.

The communication interface 405 transmits and receives data to and from an external apparatus. For example, the communication interface 405 communicates with an external apparatus via a wired communication path or a wireless communication path.

<Operation of example embodiment>

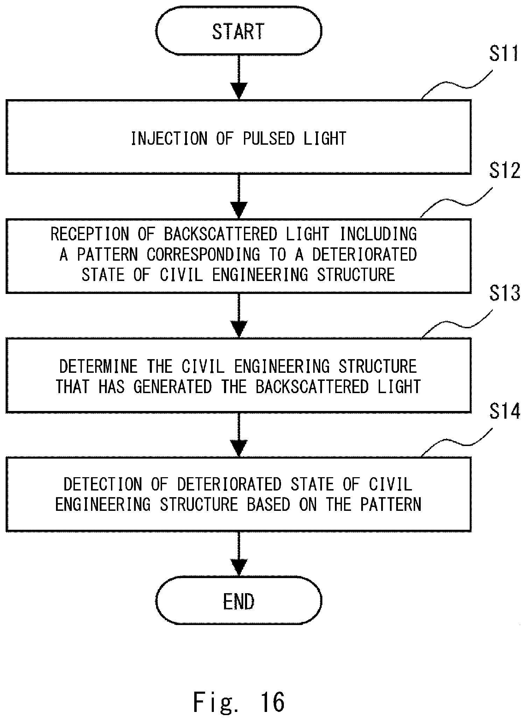

Hereinafter, the operation of the civil engineering structure monitoring system according to the present example embodiment will be described. Here, the operation flow of the civil engineering structure monitoring system according to the present example embodiment will be described with reference to Fig. 16.

As shown in Fig. 16, first, the fiber sensing unit 331 injects pulsed light into at least one communication optical fiber included in the optical fiber cable 20 (step S11).

Subsequently, the fiber sensing unit 331 receives backscattered light including a pattern corresponding to a deteriorated state of the civil engineering structure 10 from the same communication optical fiber as the communication optical fiber into which the pulsed light is injected (step S12).

Subsequently, the fiber sensing unit 331 determines the civil engineering structure 10 in which the backscattered light received in step S12 has been generated (step S13). At this time, the fiber sensing unit 331 may determine the civil engineering structure 10 in which the backscattered light has been generated, by using the above-described method based on time difference.

After that, the detection unit 332 detects a deteriorated state of the civil engineering structure 10 determined in step S13 based on the pattern included in the backscattered light received in step S12 (step S14). At this time, the detection unit 332 may detect a deteriorated state of the civil engineering structure 10 by using any of Method A to Method E described above.

Note that, in Fig. 16, in step S12, the processing of steps S13 and S14 may be performed each time when the backscattered light including a pattern corresponding to a deteriorated state of the civil engineering structure 10 is received. Alternatively, in step S12, after a plurality of backscattered lights including a pattern corresponding to a deteriorated state of the civil engineering structure 10 are received, the processing of steps S13 and S14 may be performed for each backscattered light.

<Advantageous effects of example embodiment>

As described above, according to the present example embodiment, backscattered light (optical signal) including a pattern corresponding to a deteriorated state of the civil engineering structure 10 is received from at least one communication optical fiber included in the optical fiber cable 20. Then, the deteriorated state of the civil engineering structure 10 is detected based on the pattern contained in the received backscattered light. As described above, according to the present example embodiment, the deteriorated state of the civil engineering structure 10 may be detected, for example, by performing dynamic pattern analysis of the change in vibration generated in the civil engineering structure 10 (for example, the transition of change in the intensity of vibration, and the like). Therefore, a deteriorated state of the civil engineering structure 10 can be detected with high accuracy.

Further, according to the present example embodiment, in order to detect a deteriorated state of the civil engineering structure 10, an existing communication optical fiber may be used, and it is neither necessary to include quantum dots in the optical fiber as in Patent Literature 1, nor to drive a rock bolt into the underground space of the civil engineering structure 10 as in Patent Literature 2. Thus, since a dedicated structure for detecting a deteriorated state of the civil engineering structure 10 is not required, the civil engineering structure monitoring system can be constructed at low cost.

Further, according to the present example embodiment, since deteriorated states of a plurality of civil engineering structures 10 can be detected simultaneously and remotely by using an existing communication optical fiber, it becomes easier to grasp deteriorated states of the civil engineering structure 10, and to reduce the cost of grasping deteriorated states of the civil engineering structure 10.

Further, according to the present example embodiment, an optical fiber sensing technology using an optical fiber as a sensor is used. Therefore, it is possible to obtain advantages such as insensitivity to electromagnetic noise, non-necessity to supply power to the sensor, excellence in environmental resistance, facilitated maintenance, and the like.

### <Other example embodiments>

Note that, as described above, the fiber sensing unit 331 can calculate a generation position where the backscattered light is generated based on the time difference between the time when the pulsed light is injected into the communication optical fiber, and the time when a backscattered light including a pattern corresponding to a deteriorated state of the civil engineering structure 10 is received from the same communication optical fiber. Therefore, the fiber sensing unit 331 may, based on the calculation result, not only determine the civil engineering structure 10 in which the backscattered light is generated, but also determine a deteriorated position of the civil engineering structure 10.

Further, the detection unit 332 may be configured to hold the detected deteriorated state of the civil engineering structure 10 described above for each civil engineering structure 10, and may detect the state change over time of deteriorated state of the civil engineering structure 10 by detecting the deteriorated state of the civil engineering structure 10 periodically (for example, annually).

Further, the detection unit 332 may detect a sign of deterioration or breakage of the civil engineering structure 10 based on the state change over time of the deteriorated state of the civil engineering structure 10.

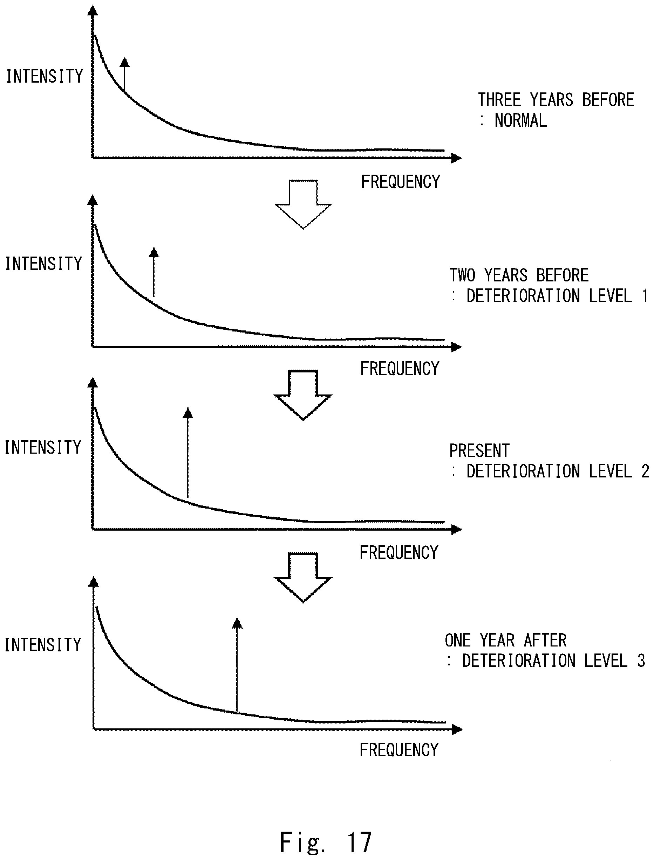

Here, with reference to Fig. 17, a method of detecting a sign of deterioration or breakage of the civil engineering structure 10 in the detection unit 332 will be described. Fig. 17 shows, in chronological order, the frequency characteristics of the vibration data of the civil engineering structure 10 similar to those in Figs. 3 and 4.

As shown in Fig. 17, the detection unit 332 predicts the frequency characteristics of one year after based on the change over time in the frequency characteristics of the vibration data of the civil engineering structure 10 of three years before, two years before, and the present time, and based on the predicted frequency characteristics of one year after, predicts deterioration or breakage of the civil engineering structure 10 in one year after. Here, the detection unit 332 has predicted that the civil engineering structure 10 will reach a deterioration level 3 after one year based on the frequency at which a peak occurs in the frequency characteristics of one year after.

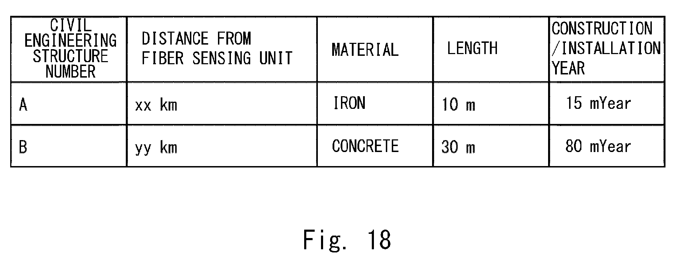

Further, the fiber sensing unit 331 may further add the information of each civil engineering structure to the civil engineering structure information held by itself, and the detection unit 332 may also use the additional information added to the civil engineering structure information to detect a deteriorated state of the civil engineering structure 10. Fig. 18 shows another example of the civil engineering structure information. The civil engineering structure information shown in Fig. 18 is added with information on the material, length, and construction year (or installation year) of each civil engineering structure 10 as compared with Fig. 2. Therefore, the detection unit 332 may detect a deteriorated state of the civil engineering structure 10 by taking into consideration of the material, length, and construction year information of the civil engineering structure 10 in addition to the pattern corresponding to the deteriorated state of the civil engineering structure 10 contained in the backward scattered light. As a result, the detection accuracy can be improved.

Further, after the civil engineering structure 10, which has been detected to be deteriorated by the detection unit 332, is replaced with a new one, the analyst may actually disassemble the old civil engineering structure 10 to determine an actual deterioration level. At this time, if there is a difference between the deterioration level detected by the detection unit 332 and the deterioration level judged by the analyst, the difference may be fed back to the detection unit 332. In this case, since the detection unit 332 thereafter will detect the deteriorated state of the civil engineering structure 10 such that its deterioration level approaches the actual deterioration level, the detection accuracy can be improved.

Further, when a pattern corresponding to a deteriorated state of the civil engineering structure 10 is machine learnt by Method E in the detection unit 332, it is considered that the deteriorated state of the civil engineering structure 10 differs depending on the region. For example, it is considered that the deteriorated state differs between a warm region and a cold region. Therefore, the detection unit 332 may perform machine learning for each region by using the teacher data corresponding to the region.

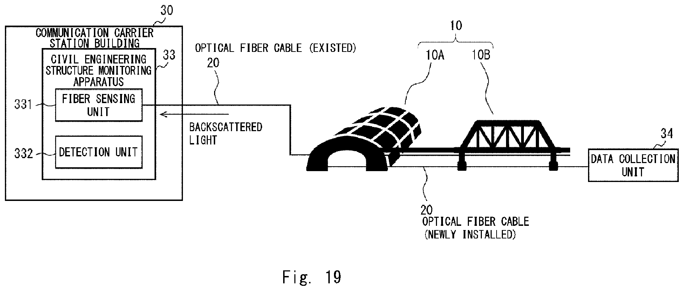

Further, in the above-described example embodiment, it is assumed that an existing optical fiber cable 20 is used, but as shown in Fig. 19, an optical fiber cable 20 may be newly installed, and the data collection unit 34 may be connected to the newly installed optical fiber cable 20. The data collection unit 34 also collects data of patterns (for example, sound, temperature, vibration, etc.) of the civil engineering structures 10A and 10B, and transmits the collected data to the detection unit 332. At this time, the transmission of data from the data collection unit 34 to the detection unit 332 may be performed via the optical fiber cable 20 or via a radio instrument which is separately provided. The detection unit 332 detects, for the civil engineering structures 10A and 10B, a deteriorated state based on the data collected by the data collection unit 34 and the fiber sensing unit 331. Therefore, the detection accuracy can be improved.

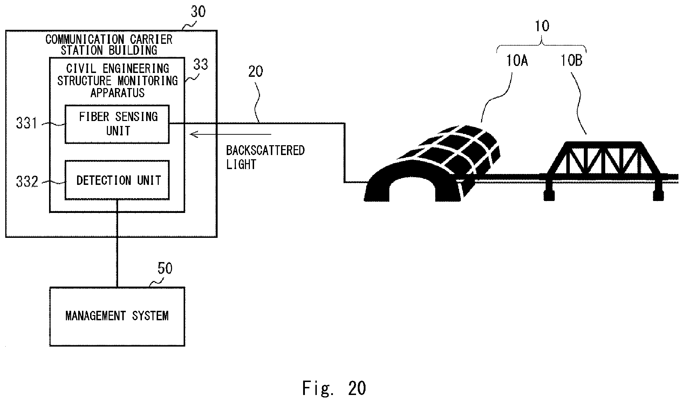

Further, as shown in Fig. 20, a management system 50 for managing the civil engineering structure 10 based on the detection result by the civil engineering structure monitoring apparatus 33 may be provided. The management system 50 may present, to the system manager or the like, a deteriorated state of the civil engineering structure 10, a state change over time of the deteriorated state of the civil engineering structure 10, a sign of deterioration or breakage of the civil engineering structure 10, or the like. Further, the management system 50 may calculate a repair time of the civil engineering structure 10 based on the detection result by the civil engineering structure monitoring apparatus 33, and present the repair time of the civil engineering structure 10 to the system manager or the like. Further, although the management system 50 is provided in the outside of the communication carrier station building 30, it may be provided inside the communication carrier station building 30. Further, when the management system 50 is provided outside the communication carrier station building 30, civil engineering structures 10 connected to each of the plurality of communication carrier station buildings 30 by the optical fiber cables 20 may be intensively monitored by a single management system 50.

Further, the fiber sensing unit 331 and the detection unit 332 of the civil engineering structure monitoring apparatus 33 may be provided separately from each other. For example, only the fiber sensing unit 331 may be provided inside the communication carrier station building 30, and the civil engineering structure monitoring apparatus 33 including the detection unit 332 may be provided outside the communication carrier station building 30.

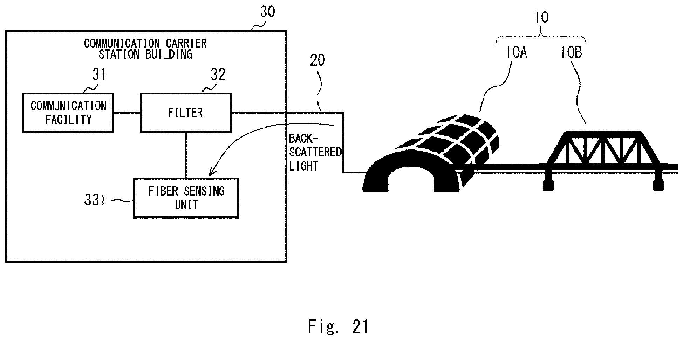

Further, in the above-described example embodiment, only one fiber sensing unit 331 is provided and it occupies the optical fiber cable 20, but this is not limiting. Here, referring to Figs. 21 to 24, the arrangement of the fiber sensing unit 331 in the civil engineering structure monitoring systems according to other example embodiments will be described. Note that in Figs. 21 to 24, illustration of the detection unit 332 is omitted.

In the example of Fig. 21, the fiber sensing unit 331 shares the optical fiber cable 20 with the existing communication facility 31. Further, in order to share the optical fiber cable 20 between the fiber sensing unit 331 and the existing communication facility 31, a filter 32 for signal separation is provided.

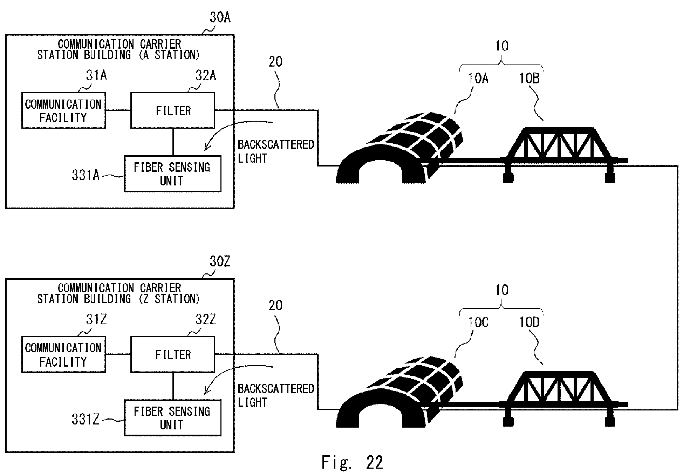

In the example of Fig. 22, one fiber sensing unit 331 is provided for each of the plurality of communication carrier station buildings 30 (in Fig. 22, two communication carrier station buildings 30A and 30Z). Specifically, fiber sensing units 331A and 331Z are provided inside the communication carrier station buildings 30A and 30Z, respectively. Note that, in the example of Fig. 22, the civil engineering structures 10A and 10B are connected to the communication carrier station building 30A by the optical fiber cable 20; the civil engineering structures 10C and 10D are connected to the communication carrier station building 30Z by the optical fiber cable 20; and the civil engineering structures 10B and 10D are connected by an optical fiber cable 20. The communication facilities 31A and 31Z correspond to the communication facility 31, and the filters 32A and 32Z correspond to the filter 32.

In the example of Fig. 22, the fiber sensing units 331A and 331Z both monitor the civil engineering structures 10A to 10D.

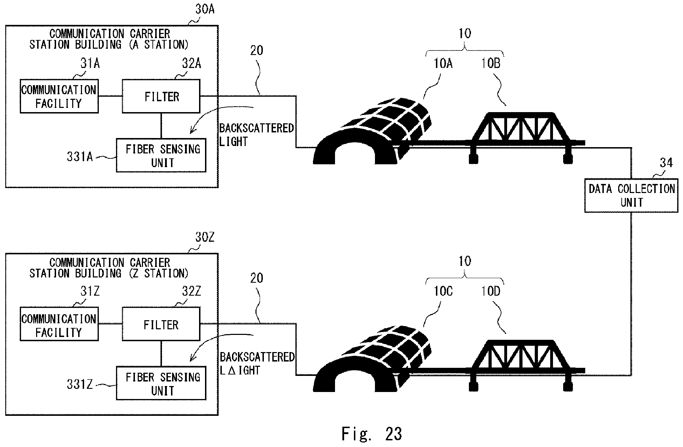

In the example of Fig. 23, the data collection unit 34 is provided in the vicinity of the civil engineering structure 10B as compared with Fig. 22. Here, while only one data collection unit 34 is provided for the four civil engineering structures 10A to 10D, the data collection unit 34 may be provided one for a predetermined number of civil engineering structures 10 (for example, 10 civil engineering structures 10), and thus one or more thereof may be provided. For example, when the optical fiber cable 20 is laid in 100 civil engineering structures 10, one data collection unit 34 for every 10 civil engineering structures 10 may be provided, and a total of 10 data collection units 34 may be provided.

In the example of Fig. 23, each data collection unit 34 collects data of patterns (for example, sound, temperature, vibration, etc.) of a corresponding predetermined number of the civil engineering structures 10, and the detection unit 332 aggregates the data collected by each data collection unit 34. At this time, the transmission of data from each data collection unit 34 to the detection unit 332 may be performed via the optical fiber cable 20 or via a separately provided radio instrument. For the civil engineering structure 10 for which the data collection unit 34 has collected data, the detection unit 332 detects a deteriorated state based on the data.

For that reason, the monitoring section of one fiber sensing unit 331 is shortened, and the number of civil engineering structures 10 to be monitored is reduced. Since the transmission distances of the pulsed light and the backscattered light are shortened as a result of the shortening of the monitoring section of the fiber sensing unit 331, the fiber loss is reduced. As a result, the S/N ratio (signal-to-noise ratio) of the backscattered light to be received can be improved, and the monitoring accuracy can be improved. Further, as a result of decrease in the number of civil engineering structures 10 to be monitored by the fiber sensing unit 331, it is possible to increase the monitoring cycle.

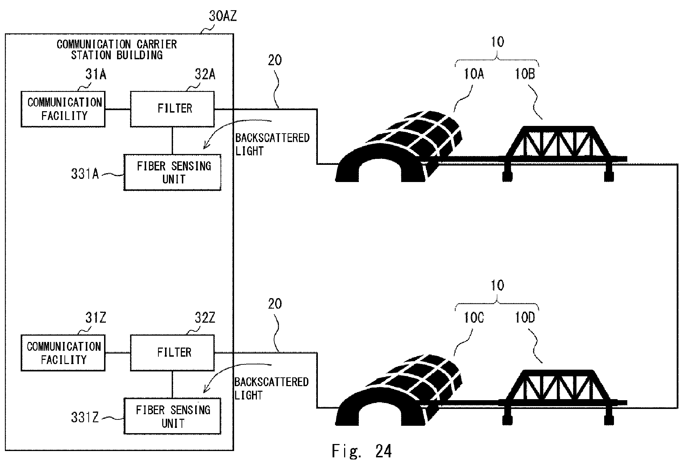

In the example of Fig. 24, a plurality of fiber sensing units 331 (in Fig. 24, two fiber sensing units 331A and 331Z) are provided in one communication carrier station building 30AZ. Note that, in the example of Fig. 24, the civil engineering structures 10A and 10B are connected to the fiber sensing unit 331A by the optical fiber cable 20; the civil engineering structures 10C and 10D are connected to the fiber sensing unit 331Z by the optical fiber cable 20; and the civil engineering structures 10B and 10D are connected by the optical fiber cable 20. The communication facilities 31A and 31Z correspond to the communication facility 31, and the filters 32A and 32Z correspond to the filter 32.

In the example of Fig. 24, the fiber sensing units 331A and 331Z both monitor the civil engineering structures 10A to 10D. However, the fiber sensing unit 331A injects pulsed light in the clockwise direction to monitor the civil engineering structures 10A to 10D, and the fiber sensing unit 331Z injects pulsed light in the counterclockwise direction to monitor the civil engineering structures 10A to 10D.

Note that when a plurality of fiber sensing units 331 are provided as shown in Figs. 22 to 24, one civil engineering structure monitoring apparatus 33 including the detection unit 332 may be provided for the plurality of fiber sensing units 331. Then, a deteriorated state of the civil engineering structure 10 connected to each of the plurality of fiber sensing units 331 by the optical fiber cable 20 may be intensively detected by one civil engineering structure monitoring apparatus 33. In this case, the civil engineering structure monitoring apparatus 33 may be provided inside any one of the communication carrier station building 30, or may be provided outside the communication carrier station building 30.

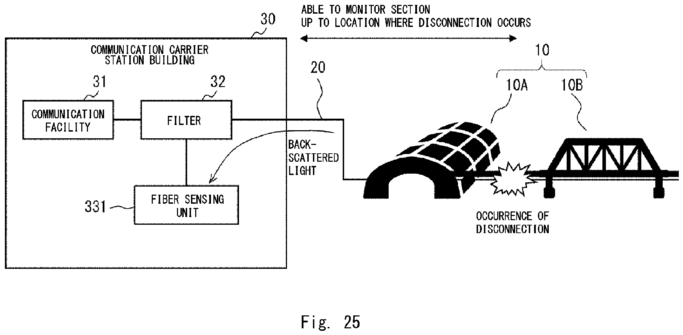

Further, the optical fiber cable 20 laid in the civil engineering structure 10 may possibly be disconnected. Accordingly, referring to Figs. 25 to 27, the operation of the fiber sensing unit 331 when the optical fiber cable 20 is disconnected in the civil engineering structure monitoring system according to another example embodiment will be described. Note that, in Figs. 25 to 27, illustration of the detection unit 332 is omitted.

The example of Fig. 25 is an example in which the optical fiber cable 20 between the civil engineering structure 10A and the civil engineering structure 10B is disconnected in the configuration of Fig. 21. The fiber sensing unit 331 continues to inject pulsed light into the optical fiber cable 20 even if the optical fiber cable 20 is disconnected. As a result, the communication carrier station building 30 can continue the monitoring of the section up to the disconnected position.

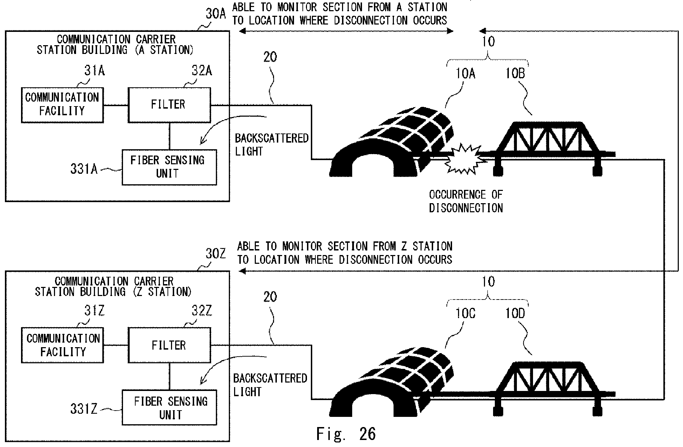

The example of Fig. 26 is an example in which the optical fiber cable 20 between the civil engineering structure 10A and the civil engineering structure 10B is disconnected in the configuration of Fig. 22. The fiber sensing units 331A and 331Z continue to inject pulsed light into the optical fiber cable 20 even if the optical fiber cable 20 is disconnected. At this time, the civil engineering structure 10 is always connected to two or more communication carrier station buildings 30 (two communication carrier station buildings 30A and 30Z in Fig. 26). Therefore, by the communication carrier station buildings 30A and 30Z performing the monitoring from both directions, it is possible to construct a redundant configuration capable of continuously monitoring the entire section in the event of a single failure.

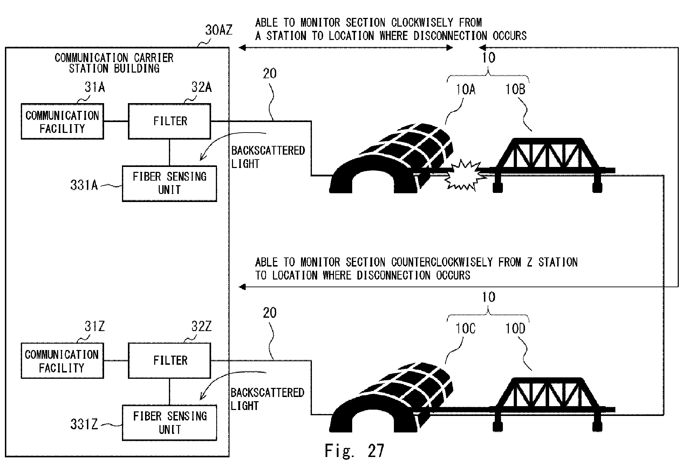

The example of Fig. 27 is an example in which the optical fiber cable 20 between the civil engineering structure 10A and the civil engineering structure 10B is disconnected in the configuration of Fig. 24. The fiber sensing units 331A and 331Z continue to inject pulsed light into the optical fiber cable 20 even if the optical fiber cable 20 is disconnected. At this time, in the example of Fig. 27, a ring configuration in which the optical fiber cables 20 are connected in a ring shape is constructed. Therefore, by performing the monitoring from one communication carrier station building 30AZ in both directions of the ring, it is possible to construct a redundant configuration capable of continuously monitoring the entire section in the event of a single failure.

Although the present disclosure has been described above with reference to the example embodiments, the present disclosure is not limited to the above-described example embodiments. Various changes that can be understood by those skilled in the art can be made to the configuration and details of the present disclosure within the scope of this disclosure.

In addition, some or all of the above embodiments may be described as in the following appendix, but are not limited to the following.

### (Supplementary note 1)

A civil engineering structure monitoring system, comprising:
a cable including communication optical fibers and laid in a civil engineering structure;
a reception unit configured to receive, from at least one of the communication optical fibers included in the cable, an optical signal including a pattern corresponding to a deteriorated state of the civil engineering structure; and
a detection unit configured to detect the deteriorated state of the civil engineering structure based on the pattern.

### (Supplementary note 2)

The civil engineering structure monitoring system according to Supplementary note 1, wherein
the reception unit determines the civil engineering structure where the optical signal has been generated based on the optical signal, and
the detection unit detects a deteriorated state of the determined civil engineering structure based on the pattern.

### (Supplementary note 3)

The civil engineering structure monitoring system according to Supplementary note 2, wherein the reception unit determines a deteriorated position of the civil engineering structure based on the optical signal.

### (Supplementary note 4)

The civil engineering structure monitoring system according to any one of Supplementary notes 1 to 3, wherein the detection unit detects a state change over time of deteriorated state of the civil engineering structure by detecting a deteriorated state of the civil engineering structure periodically.

### (Supplementary note 5)

The civil engineering structure monitoring system according to Supplementary note 3, wherein the detection unit detects a sign of deterioration or breakage of the civil engineering structure based on a state change over time of deteriorated state of the civil engineering structure.

### (Supplementary note 6)

A civil engineering structure monitoring apparatus, comprising:
a reception unit configured to receive, from at least one of communication optical fibers included in the cable laid in a civil engineering structure, an optical signal including a pattern corresponding to a deteriorated state of the civil engineering structure; and
a detection unit configured to detect the deteriorated state of the civil engineering structure based on the pattern.

### (Supplementary note 7)

The civil engineering structure monitoring apparatus according to Supplementary note 6, wherein
the reception unit determines the civil engineering structure where the optical signal has been generated based on the optical signal, and
the detection unit detects a deteriorated state of the determined civil engineering structure based on the pattern.

### (Supplementary note 8)

The civil engineering structure monitoring apparatus according to Supplementary note 7, wherein the reception unit determines a deteriorated position of the civil engineering structure based on the optical signal.

### (Supplementary note 9)

The civil engineering structure monitoring apparatus according to any one of Supplementary notes 6 to 8, wherein the detection unit detects a state change over time of deteriorated state of the civil engineering structure by detecting a deteriorated state of the civil engineering structure periodically.

### (Supplementary note 10)

The civil engineering structure monitoring apparatus according to Supplementary note 9, wherein the detection unit detects a sign of deterioration or breakage of the civil engineering structure based on a state change over time of deteriorated state of the civil engineering structure.

### (Supplementary note 11)

A civil engineering structure monitoring method by a civil engineering structure monitoring apparatus, the method comprising:
receiving, from at least one of communication optical fibers included in a cable laid in a civil engineering structure, an optical signal including a pattern corresponding to a deteriorated state of the civil engineering structure; and
detecting the deteriorated state of the civil engineering structure based on the pattern.

### (Supplementary note 12)

A non-transitory computer-readable medium storing a program for making a computer execute procedures of:
receiving, from at least one of communication optical fibers included in the cable laid in a civil engineering structure, an optical signal including a pattern corresponding to a deteriorated state of the civil engineering structure; and
detecting the deteriorated state of the civil engineering structure based on the pattern.

This application claims priority based on Japanese Patent Application No. 2018-211915 filed on November 12, 2018, the disclosure of which is herein incorporated by reference in its entirety.

### Reference Signs List

10, 10A to 10D civil engineering structure
20 optical fiber cable
30, 30A, 30Z, 30AZ communication carrier station building
31, 31A, 31Z communication facility
32, 32A, 32Z filter
33 civil engineering structure monitoring apparatus
331, 331A, 331Z fiber sensing unit
332 detection unit
34 data collection unit
40 computer
401 processor
402 memory
403 storage
404 input/output interface
4041 display apparatus
4042 input apparatus
405 communication interface
50 management system

## Claims

1. A civil engineering structure monitoring system, comprising:
a cable including communication optical fibers and laid in a civil engineering structure;
a reception unit configured to receive, from at least one of the communication optical fibers included in the cable, an optical signal including a pattern corresponding to a deteriorated state of the civil engineering structure; and
a detection unit configured to detect the deteriorated state of the civil engineering structure based on the pattern.

2. The civil engineering structure monitoring system according to Claim 1, wherein
the reception unit determines the civil engineering structure where the optical signal has been generated based on the optical signal, and
the detection unit detects a deteriorated state of the determined civil engineering structure based on the pattern.

3. The civil engineering structure monitoring system according to Claim 2, wherein the reception unit determines a deteriorated position of the civil engineering structure based on the optical signal.

4. The civil engineering structure monitoring system according to any one of Claims 1 to 3, wherein the detection unit detects a state change over time of deteriorated state of the civil engineering structure by detecting a deteriorated state of the civil engineering structure periodically.

5. The civil engineering structure monitoring system according to Claim 3, wherein the detection unit detects a sign of deterioration or breakage of the civil engineering structure based on a state change over time of deteriorated state of the civil engineering structure.

6. A civil engineering structure monitoring apparatus, comprising:
a reception unit configured to receive, from at least one of communication optical fibers included in the cable laid in a civil engineering structure, an optical signal including a pattern corresponding to a deteriorated state of the civil engineering structure; and
a detection unit configured to detect the deteriorated state of the civil engineering structure based on the pattern.

7. The civil engineering structure monitoring apparatus according to Claim 6, wherein
the reception unit determines the civil engineering structure where the optical signal has been generated based on the optical signal, and
the detection unit detects a deteriorated state of the determined civil engineering structure based on the pattern.

8. The civil engineering structure monitoring apparatus according to Claim 7, wherein the reception unit determines a deteriorated position of the civil engineering structure based on the optical signal.

9. The civil engineering structure monitoring apparatus according to any one of Claims 6 to 8, wherein the detection unit detects a state change over time of deteriorated state of the civil engineering structure by detecting a deteriorated state of the civil engineering structure periodically.

10. The civil engineering structure monitoring apparatus according to Claim 9, wherein the detection unit detects a sign of deterioration or breakage of the civil engineering structure based on a state change over time of deteriorated state of the civil engineering structure.

11. A civil engineering structure monitoring method by a civil engineering structure monitoring apparatus, the method comprising:
receiving, from at least one of communication optical fibers included in a cable laid in a civil engineering structure, an optical signal including a pattern corresponding to a deteriorated state of the civil engineering structure; and
detecting the deteriorated state of the civil engineering structure based on the pattern.

12. A non-transitory computer-readable medium storing a program for making a computer execute procedures of:
receiving, from at least one of communication optical fibers included in the cable laid in a civil engineering structure, an optical signal including a pattern corresponding to a deteriorated state of the civil engineering structure; and
detecting the deteriorated state of the civil engineering structure based on the pattern.
